# EUROPEAN PATENT SPECIFICATION

(11) **EP 1 394 646 B1**
(45) Date of publication and mention of the grant of the patent: **17.10.2007**
(21) Application number: 03017897.4
(22) Date of filing: 05.08.2003
(51) Int. Cl.: G05D 16/20

(54) **Differential pressure control valve**
Differenzdruckregelventil
Soupape de régulation d'une différence de pression

(30) Priority: 22.08.2002 JP 2002242084
(43) Date of publication of application: 03.03.2004
(73) Proprietor: TGK CO., Ltd., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- EP-A- 1 069 359
- DE-U1- 9 313 579
- FR-A- 1 491 463
- PATENT ABSTRACTS OF JAPAN vol. 014, no. 009 (E-870), 10 January 1990 (1990-01-10) & JP 01 255124 A (SAGINOMIYA SEISAKUSHO INC), 12 October 1989 (1989-10-12)

## Description

The present invention relates to a differential pressure control valve according to the preamble part of claim 1, particularly suitable for use as a pressure reducing device in a refrigerating cycle of an automotive air conditioner.

In a known refrigerating cycle of an automotive air conditioning system, for example, high-temperature, high-pressure gaseous refrigerant compressed by a compressor is condensed or cooled by a condenser or a gas cooler. The condensed or cooled refrigerant is converted by a pressure reducing device into low-temperature, low-pressure refrigerant. The low-temperature refrigerant is evaporated by an evaporator and then is separated by an accumulator into gas and liquid. The gaseous refrigerant is returned to the compressor. Frequently, a differential pressure control valve is used as the pressure reducing device. When using carbonic acid gas, the pressures to be controlled are extremely high as compared with an alternative fluorocarbon refrigerant. The high pressures require a huge and heavy solenoid when directly controlling the valve element lift. For that reason, it is known to employ, a differential pressure control valve having a construction similar to a pilot valve controlled flow regulating valve. The weak actuation force of the pilot valve allows to use a smaller and lighter solenoid.

EP-A-1 069 359 A and JP-A-2001-27355 disclose pilot-operated differential pressure control valves comprising a main valve between inlet and outlet spaces. A piston is axially movable in alignment with the main valve element. A pilot valve controls the pressure in a piston chamber on the side of the piston opposite the main valve element. High-pressure refrigerant is introduced from the inlet space through the pilot valve into the piston chamber, and leaks through an orifice formed in the piston to the outlet space. The piston axially slides in a cylinder bore in accordance with a difference between the pressures in the piston chamber and the outlet space. The piston transmits the movement in valve opening direction to the main valve element via a shaft. The piston has a peripheral piston ring for suppressing leakage from the piston chamber to the outlet space. However, the piston ring has an interruption and generally cannot completely avoid leakage. Refrigerant inevitably leaks past the piston ring, making it necessary to increase the diameter of the other throttling orifice that substantially leaks refrigerant from the piston chamber to the outlet port. In addition, a piston ring made of a material having the property of swelling upon absorption of refrigerant, tends to vary the size of the circumferential interruption, causing variations of the amount of leakage. Hence, the problem arises in that the differential pressure-flow rate characteristic may vary randomly.

It is an object of the present invention to provide a differential pressure control valve capable of reliably operating without leakage along the periphery of the main valve piston.

Said object is achieved by a valve comprising the features of claim 1.

The diaphragm arranged around the outer periphery of the main valve piston allows both the main valve piston and the main valve element to move in axial direction, while the outer periphery of the main valve piston and particularly the leakage prone sliding portion remains sealed. The flow rate characteristics of the differential pressure control valve are stabilised, because leakages between the piston chamber and the high-pressure containing inlet space are avoided. The main valve element is situated in the inlet space and is integral with the main valve piston.

An embodiment of the invention will be described with reference to the drawings, wherein the invention is applied, by way of example, to a pressure reducing device within which the differential pressure between inlet and outlet sides can be freely set by the external signal, e.g. in an automotive air-conditioner.
- Fig 1: is a longitudinal section of an embodiment according to the invention of a differential pressure control valve,
- Fig. 2: is an enlarged section showing a part A of Fig 1 in enlarged scale,
- Fig. 3: is a section of an embodiment, which does not belong to the invention

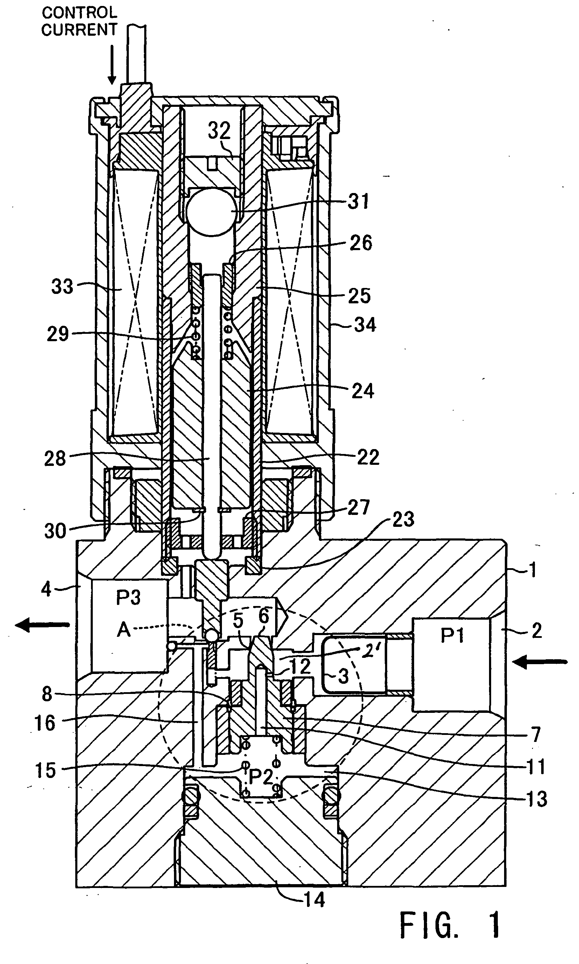

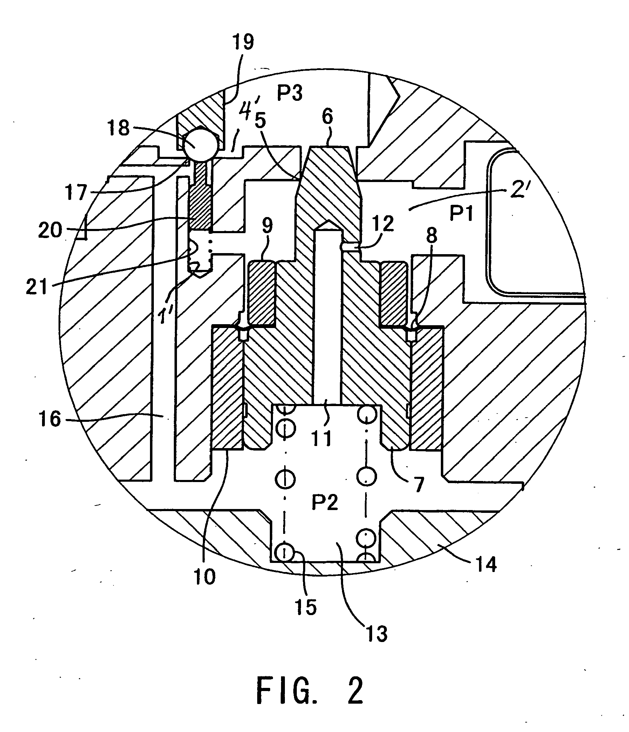

The differential pressure control valve in Figs 1, 2 has an inlet port 2 formed on a side face of a body 1 for receiving refrigerant under high inlet pressure P1. A strainer 3 is arranged in the inlet port 2. An outlet port 4 is formed on the other side of the body 1 opposite the inlet port 2. A main valve seat 5 integral with the body 1 is located between the inlet and outlet ports 2,4. A main valve element 6 faces the main valve seat 5 from the upstream side and constitutes, in cooperation with the main valve seat 5, a main valve 5, 6. The main valve element 6 is integral with a main valve piston 7 which actuates the main valve element 6 in opening and closing directions. A refrigerant introduction space 2' is defined in the body between the main valve piston 7 and the main valve seat 5.

The main valve piston 7 has an upper small-diameter part and a lower large-diameter part with a shoulder located therebetween. On the shoulder is placed an inner peripheral edge portion of an annular diaphragm 8. A fixing ring 9 is tightly fitted round the small-diameter part of the main valve piston 7 from above the diaphragm 8, thereby fixing the inner peripheral portion of the diaphragm 8 to the main valve piston 7. An outer peripheral edge portion of the diaphragm 8 is fixed to the body 1 by a cylindrical sleeve member 10 press fitted into the body 1. The cylindrical member 10 slidably receives the main valve piston 7 in an inner cylinder. The diaphragm 8 isolates or seals the sliding portion of the main valve piston 7 in the cylinder. Leakage of refrigerant through the sliding portion of the main valve piston 7 is completely prevented in both flow directions. The diaphragm 8 may be made of a polyimide film having high tensile strength. Other materials may be used as well, as long as the material is impermeable and resistant for refrigerant and has a certain elasticity.

The main valve piston 7 contains an axial refrigerant passage 11 communicating with the refrigerant introduction space 2' through an orifice 12 laterally penetrating the main valve element 6. The orifice 12 serves to reduce the inlet pressure P1 in the refrigerant introduction chamber 2' and constitutes, in cooperation with the refrigerant passage 11, a restricted flow passage leading to a piston chamber 13 defined beneath the main valve piston 7. The flow area of the orifice 12 is fixed to achieve stable flow rate characteristics.

The piston chamber 13 is closed by an adjusting screw 14. A spring 15 is arranged between the main valve piston 7 and the adjusting screw 14 to urge the main valve piston 7 in a closing direction of the main valve. The adjusting screw 14 is screwed into the body 1 so that the spring load may be adjustable.

The piston chamber 13 communicates via a pilot passage 16 in the body 1 with a downstream side of the main valve, that is, a space 4' connected to the outlet port 4. An open end of the pilot passage 16 in the space 4' serves as a pilot valve seat 17. A ball-shaped pilot valve element 18 axially movably faces the pilot valve seat 17 from the downstream side and constitutes, in cooperation with the pilot valve seat 17, a pilot valve 17, 18. The pilot valve element 18 is held by a shaft 19.

A pilot piston 20 (Fig. 2) is axially movably arranged in alignment with the pilot valve element 18 in a body cylinder 1' and is urged from below by a spring 21. The body cylinder 1' communicates with the refrigerant introduction chamber 2'. The inlet pressure P1 acts upon the pilot piston 20 in a direction of opening the pilot valve 17, 18.

The body cylinder 1' has an inner diameter equal to that of the pilot valve seat 17 so that the pilot valve element 18 and the pilot piston 20 may have equal pressure receiving areas. Thus, the pilot valve element 18 and the pilot piston 20 receive in opposite directions the same intermediate pressure P2 present in the piston chamber 13. The intermediate pressure P2 has no influence upon movements of the pilot valve 17, 18. The pilot valve 17, 18 responds exclusively to a differential pressure between the inlet and outlet pressures.

A solenoid controlling the pilot valve 17, 18 is arranged on the body 1 and has a sleeve 22 aligned with the pilot valve 17, 18. The sleeve 22 has a lower end pressed against a ring-shaped packing 23 to seal the joint with the body 1 from outside.

A plunger 24 is axially movably arranged in the sleeve 22. A core 25 is secured to an upper end portion of the sleeve 22 and closes the sleeve. The core 25 is a hollow member and has an internal bearing 26 screwed. The bearing 26 cooperates with a bearing 27 screwed into a lower part of the sleeve 22 to support, at two locations, both ends of a shaft 28 supporting the plunger 24, such that the periphery of the plunger 24 does not contact the inner wall of the sleeve 22 to reduce the sliding resistance. A spring 29 is arranged between the plunger 24 and the bearing 26 and urges the plunger 24 toward the pilot valve 17, 18. The load on the spring 29 is adjusted by varying the distance for which the bearing 26 is screwed in. The plunger 24 has a lower end face stopped by an E-ring 30 fitted on the shaft 28. The force of the spring 29 is transmitted to the shaft 28 and in turn in valve closing direction to the pilot valve in the valve 17,18.

An upper open end of the core 25 is closed with a stop plug 31 and a locking screw 32. The sleeve 22 and the core 25 are surrounded by an electromagnetic coil 33, surrounded by a case 34 serving as a yoke. The case 34 is screwed on an upper part of the body 1.

When no current is supplied to the electromagnetic coil 33 and no refrigerant is introduced into the inlet port 2, the main valve element 6 is seated on the main valve seat 5 by spring 15. The main valve is in a closed state. The pilot valve element 18 is seated on the pilot valve seat 17 by the spring 29 having a larger spring force than the spring 21. The pilot valve 17, 18 is in a closed state.

As high-pressure refrigerant with inlet pressure P1 is introduced into the inlet port 2, the refrigerant flows into the refrigerant introduction chamber 2' surrounding the upper part of the main valve piston 7. The pilot piston 20 receives the inlet pressure P1 at its lower end face, but since the pressure receiving area is small, the pilot piston 20 fails to lift the pilot valve element 18 open even if assisted by the inlet pressure P1. The pilot valve 17, 18 remains fully closed. The refrigerant gradually flows from the refrigerant introduction chamber 2' through the orifice 12 into the piston chamber 13. The intermediate pressure P2 in the piston chamber 13 gradually rises and is introduced to the pilot valve through the pilot passage 16. The intermediate pressure P2 exerts no influence on the pilot valve.

Subsequently, a predetermined control current is supplied to the electromagnetic coil 33. The plunger 24 is attracted by the core 25. The force of the spring 29 is reduced and the pilot piston 20 lifts the pilot valve element 18 with the aid of the inlet pressure P1 and sets a predetermined pilot valve lift. Refrigerant flows from the piston chamber 13 into the outlet port 4 through the pilot valve 17, 18. The intermediate pressure P2 is lowered. The main valve piston 7 moves downward against the force of the spring 15. The main valve 5, 6 opens and the refrigerant flows from the inlet port 2 to the outlet port 4.

In this state, the pilot piston 20 and pilot valve element 18 of the pilot valve operate in response to a differential pressure between the inlet and outlet pressures P1 and P3. If the inlet pressure P1 rises, the pilot piston 20 moves the pilot valve in the valve opening direction to decrease the intermediate pressure P2 in the piston chamber 13. Accordingly, the main valve piston 7 moves downward to further open the main valve wider and decreases the inlet pressure P1. Conversely, if the inlet pressure P1 lowers, the pilot piston 20 moves the pilot valve in the valve closing direction to raise the intermediate pressure P2 in the piston chamber 13, and accordingly, the main valve piston 7 moves upward to further close the main valve and increases the inlet pressure P1. The differential pressure between the inlet and outlet pressures P1 and P3 is kept constant. Moreover, the pilot piston 20 of the pilot valve directly receives the inlet pressure P1 such that any pressure variations in the inlet port 2 are transmitted to the pilot valve 17, 18 in real time. Accordingly, the pilot valve 17, 18 responds with high sensitivity to inlet pressure variations, and the main valve 5, 6 operates in response to the movement of the pilot valve 17, 18. Since the main valve as well responds to variations of the inlet pressure P1 almost in real time, hunting of the valve can be restrained.

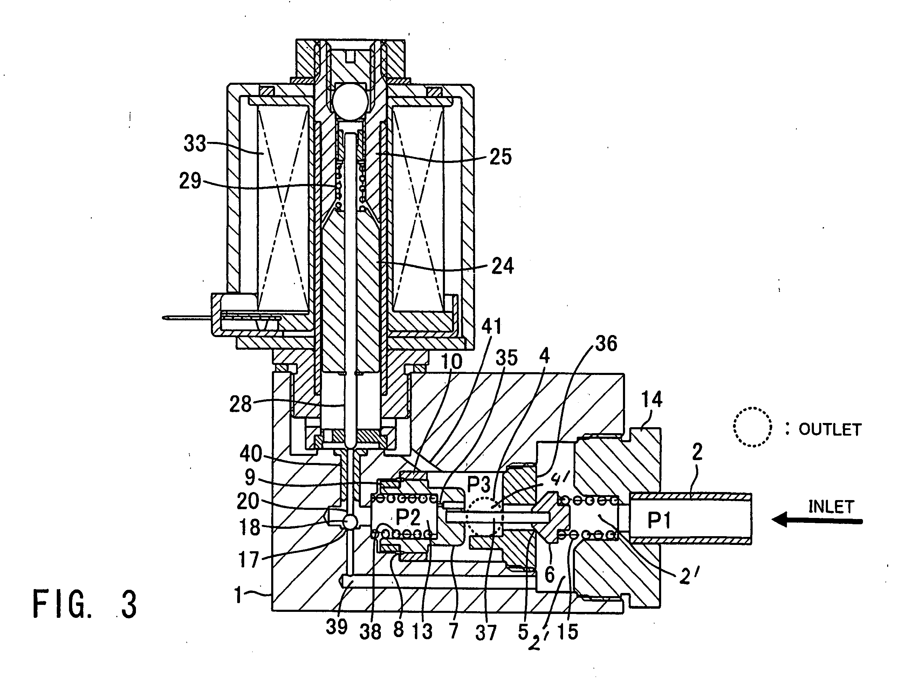

In the differential pressure control valve of the embodiment in Fig. 3 , which does not belong to the invention, pressure is introduced into the piston chamber 13 through the pilot valve 17, 18 and is discharged from the piston chamber 13 through an orifice 35 formed in the main valve piston 7.

A plug 36 defines a refrigerant introduction chamber 2' communicating with the inlet port 2. The plug 36 has an axial valve hole defining the main valve seat 5. The main valve element 6 faces the main valve seat 5 from the upstream side. The main valve element 6 is urged by the spring 15 in the valve closing direction. The main valve piston 7 has a larger pressure receiving area than the main valve element 6. The piston 7 is axially movably arranged on the downstream side of the main valve 5, 6. The main valve piston 7 is coupled to the main valve element 6 by a shaft 37 extending through the valve hole of the main valve seat 5. A space 4' between the plug 36 and the main valve piston 7 communicates with the outlet port 4.

The main valve piston 7 is a hollow pot-piston open at the end opposite from the plug 36. The hollow cavity constitutes the piston chamber 13. A spring 38 is arranged in the piston chamber 13 and urges the main valve piston 7 in opening direction of the main valve 5, 6. An orifice 35 connects the piston chamber 13 and the outlet port 4 or the space 4', respectively.

The sliding portion of the main valve piston 7 is sealed by the diaphragm 8. The diaphragm 8 has an inner peripheral edge portion clamped between the main valve piston 7 and the fixing ring 9, and an outer peripheral edge portion clamped between the body 1 and the cylindrical member 10. The diaphragm 8 permits axial movement of the main valve piston 7 and completely prevents leakage through the sliding portion of the main valve piston 7.

The body 1 has a pilot passage 39 connecting the refrigerant introduction chamber 2' via the pilot valve 17, 18 to the piston chamber 13. An open end of the pilot passage 39 in a space communicating with the piston chamber 13 defines as the pilot valve seat 17 for the pilot valve element 18. The pilot valve element 18 receives a solenoid-exerted force through the pilot piston 20 having an outer diameter equal to the inner diameter of the pilot valve seat 17. The pilot piston 20 is guided by a holder 40 securely fitted in the body 1. A solenoid-side end face of the pilot piston 20 is exposed to pressure in a space communicating with the outlet port 4 through a body passage 41. The pilot valve element 18 and the pilot piston 20 receive the inlet and outlet pressures P1 and P3 and move in response to a differential pressure between these pressures.

When no current is supplied to the electromagnetic coil 33 and no refrigerant is introduced, the main valve 5, 6 and the pilot valve 17, 18 are both fully closed. Even if high-pressure refrigerant with the inlet pressure P1 is introduced to the inlet port 2, the main valve 5, 6 remains closed because the pilot valve 17, 18 is closed.

When a predetermined control current is supplied to the coil 33, the plunger 24 is attracted toward the core 25. The pilot valve element 18 and the pilot piston 20 are pushed upward by the inlet pressure P1, so that the pilot valve 17, 18 carries out a predetermined valve lift. The inlet pressure P1 is introduced into the piston chamber 13 through the pilot valve 17, 18, and a consequent increase of the intermediate pressure P2 causes the main valve piston 7 to open the main valve via the shaft 37. The refrigerant flows to the outlet port 4.

The pilot piston 20 and pilot valve element 18 respond to a differential pressure between the inlet and outlet pressures P1 and P3. The main valve operating in response to the control by the pilot valve 17, 18, controls such that the differential pressure between the inlet and outlet pressures P1 and P3 remains constant.

## Claims

1. A differential pressure control valve of a solenoid pilot valve type for controlling a fluid flow rate such that a differential pressure between inlet and outlet spaces (2', 4) of a main valve (5, 6) equals a differential pressure set by a value of electric current supplied to a solenoid (33), the differential pressure control valve comprising a main valve (5, 6) including in a body (1) a stationary main valve seat (5) and a movable main valve element (6), a pilot valve (17, 18) actuated by the solenoid (33), a spring loaded main valve piston (7) actuating the main valve element (6) depending on a pressure (P2) in a piston chamber (13) located on the side of the main valve piston (7) opposite the main the valve element (6), the pressure (P2) being controlled by the pilot valve (17, 18), and an orifice (11, 12) in the main valve piston (7),
**characterised in that**
the main valve piston (7) is formed integrally with the main valve element (6) as a one-piece body,
that the main valve piston orifice (11, 12) connects the inlet space (2') containing the main valve element (6) with the piston chamber (13),
that the pilot valve (17, 18) is arranged between the piston chamber (13) and the outlet space (4') located on a downstream side of the main valve (5, 6) thereby controlling the lift of the main valve element (6),
that a sliding portion of the main valve piston (7) is permanently sealed by a diaphragm (8) permitting axial movements of the main valve piston (7) while sealing the sliding portion against leakages out of or into the piston chamber (13),
and that the diaphragm (8) is secured to both the main valve piston (7) and the body (1) respectively.

2. The differential pressure control valve according to claim 1, **characterised in that** the diaphragm (8) comprises an annular film having an inner peripheral edge portion clamped between the main valve piston (7) and a fixing ring (9) secured to the main valve piston (7), and an outer peripheral edge portion clamped between the body (1) and a cylindrical member (10) slidably receiving the main valve piston (7) which cylindrical member (10) is secured to the body (1).

3. The differential pressure control valve according to claim 2, **characterised in that** the diaphragm (8) comprises a polyimide film.

## Patentansprüche

1. Differentialdrucksteuerventil eines Typs mit einem magnetbetätigten Pilotventil zum Steuern einer Strömungsrate derart, dass ein Differentialdruck zwischen Einlass- und Auslassräumen (2', 4') eines Hauptventils (5, 6) einem Differentialdruck gleicht, der durch einen Wert elektrischen Stroms gesetzt ist, welcher einem Magneten (33) zugeführt wird, wobei das Differentialdrucksteuerventil das Hauptventil (5, 6) aufweist, das in einem Körper (1) einen stationären Hauptventilsitz (5) und ein bewegliches Hauptventilelement (6), ein durch den Magneten (33) betätigtes Pilotventil (17, 18), und einen federbelasteten, das Hauptventilelement (6) abhängig von einem Druck (P2) in einer Kolbenkammer (13) betätigten Hauptventilkolben (7), der an der dem Hauptventilelement (6) abgewandten Seite des Hauptventilkolbens (7) angeordnet ist, aufweist, wobei der Druck (P2) durch das Pilotventil (17, 18) gesteuert wird, und in dem Hauptventilkolben (7) eine Drosselöffnung (11, 12) vorgesehen ist,
**dadurch gekennzeichnet, dass**
der Hauptventilkolben (7) als ein einstückiger Körper integral mit dem Hauptventilelement (6) ausgebildet ist,
dass die Drosselöffnung (11, 12) des Hauptventilkolbens den das Hauptventilelement (6) enthaltenden Einlassraum (2') mit der Kolbenkammer (13) verbindet,
dass das Pilotventil (17, 18) zwischen der Kolbenkammer (13) und dem an einer Stromabseite des Hauptventils (5, 6) angeordneten Auslassraum (4') angeordnet ist und **dadurch** den Hub des Hauptventilelementes (6) steuert,
dass ein Gleitbereich des Hauptventilkolbens (7) permanent durch eine Membrane (8) versiegelt ist, die axiale Bewegungen des Hauptventilkolbens (7) zulässt, während sie den Gleitbereich gegen Leckagen aus der oder in die Kolbenkammer (13) versiegelt,
und dass die Membrane (8) jeweils sowohl an dem Hauptventilkolben (7) als auch dem Körper (1) festgelegt ist.

2. Differentialdrucksteuerventil gemäß Anspruch 1, **dadurch gekennzeichnet, dass** die Membrane (8) einen ringförmigen Film umfasst, dessen innerer Randbereich zwischen dem Hauptventilkolben (7) und einem fixierenden Ring (9) geklemmt ist, der an dem Hauptventilkolben (7) festgelegt ist, und einen äußeren Randbereich, der zwischen dem Körper (1) und einem zylindrischen Glied (10) geklemmt ist, das den Hauptventilkolben (7) gleitend aufnimmt, wobei das zylindrische Glied (10) an dem Körper (1) festgelegt ist.

3. Differentialdrucksteuerventil gemäß Anspruch 2, **dadurch gekennzeichnet, dass** die Membrane (8) einen Polyimidfilm umfasst.

## Revendications

1. Soupape de régulation de pression différentielle de type à clapet pilote à solénoïde destinée à réguler un débit de fluide de telle sorte qu'une pression différentielle qui existe entre des espaces d'admission et de sortie (2', 4') d'un clapet principal (5, 6) est égale à une pression différentielle réglée par une valeur d'un courant électrique fourni à un solénoïde (33), la soupape de régulation de pression différentielle comprenant un clapet principal (5, 6) qui inclut dans un corps (1) un siège statique de clapet principal (5) et un élément mobile de clapet principal (6), un clapet pilote (17, 18) actionné par le solénoïde (33), un piston à ressort de clapet principal (7) qui actionne l'élément de clapet principal (6) en fonction d'une pression (P2) appliquée dans une chambre de piston (13) située sur le côté du piston de clapet principal (7) en opposition à l'élément de clapet principal (6), la pression (P2) étant régulée par le clapet pilote (17, 18), et un orifice (11, 12) aménagé dans le piston de clapet principal (7),
**caractérisée en ce que** :
le piston de clapet principal (7) est intégralement formé avec l'élément de clapet principal (6) en tant que corps monobloc ;
l'orifice de piston de clapet principal (11, 12) met en connexion l'espace d'admission (2'), qui contient l'élément de clapet principal (6), avec la chambre de piston (13) ;
le clapet pilote (17, 18) est aménagé entre la chambre de piston (13) et l'espace de sortie (4') disposé sur un côté aval du clapet principal (5, 6), ce qui permet la régulation de la levée de l'élément de clapet principal (6) ;
une partie en coulissement du piston du piston de clapet principal (7) est étanche en permanence grâce à un diaphragme (8) qui permet des déplacements axiaux du piston de clapet principal (7) tout en maintenant étanche la partie en coulissement contre des fuites hors ou à l'intérieur de la chambre de piston (13) ; et
le diaphragme (8) est fixé respectivement à la fois sur le piston de clapet principal (7) et sur le corps (1).

2. Soupape de régulation de pression différentielle selon la revendication 1, **caractérisée en ce que** le diaphragme (8) se compose d'un film annulaire comportant une partie de bord périphérique interne montée entre le piston de clapet principal (7) et une bague de fixation (9) fixée sur le piston de clapet principal (7), et d'une partie de bord périphérique externe montée entre le corps (1) et un élément cylindrique (10) qui reçoit en coulissement le piston de clapet principal (7), lequel élément cylindrique (10) est fixé sur le corps (10).

3. Soupape de régulation de pression différentielle selon la revendication 2, **caractérisée en ce que** le diaphragme (8) se compose d'un film en polyimide.
